# EUROPEAN PATENT APPLICATION

(11) **EP 4 253 212 A1**
(43) Date of publication of application: **04.10.2023**
(21) Application number: 23161703.6
(22) Date of filing: 14.03.2023
(51) Int. Cl.: B62K 5/06, B62K 5/10

(54) **TRICYCLE STRUCTURE**

(30) Priority: 29.03.2022 TW 111111837
(71) Applicant: Limotec Metal Industry Limited, Taichung City 40757 (TW)
(72) Inventor: PAI, MIN LANG, 40757 TAICHUNG CITY (TW)
(74) Representative: Cabinet Chaillot

(57) **Abstract**

A tricycle includes a first frame and a second frame which is pivotally connected to the first frame. The second frame includes two first connectors and two second connectors. A driving assembly includes a chain unit, and is connected to the first frame. A rear wheel assembly includes at least one universal drive shaft which extends through one of the two second connectors of the second frame. The rear wheel assembly is connected to the chain unit of the driving assembly. The driving assembly delivers power to the driving assembly via the at least one universal drive shaft. When the first frame is inclined relative to the second frame, the chain unit is avoided from being twisted.

## Description

### BACKGROUND OF THE INVENTION

### 1. Fields of the invention

The present invention relates to a tricycle structure, and more particularly, to a cargo bike having pivotably connected first and second frames, at least one universal drive shaft to avoid the chain unit from being twisted.

### 2. Descriptions of Related Art

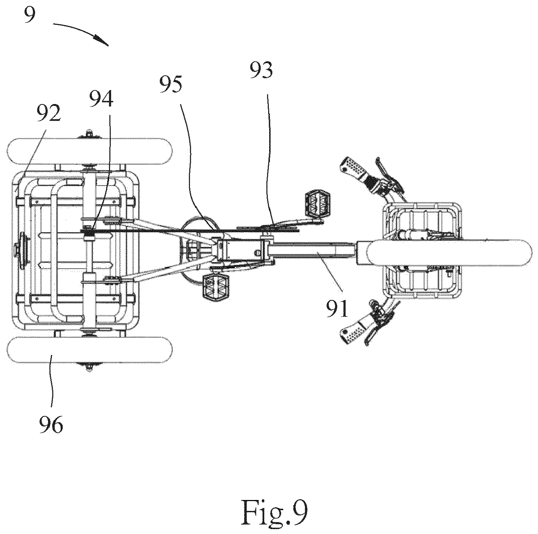

Please refer to Fig. 9, a conventional electric tricycle 9 generally includes a first frame 91 and a second frame 92. The first frame 91 has a driving gear 93, and the second frame 92 has a driven gear 94. The driving gear 93 and the driven gear 94 are connected to each other by a chain 95. The first frame 91 and the second frame 92 are pivotally connected to each other. By rotating the driving gear 93, the power is transmitted to the chain 95, and then the power is transmitted to the two wheels 96 through the chain 95 to provide forward power for the electric tricycle 9.

However, when the electric tricycle 9 is turning during travel, in order to overcome the centrifugal force of the turn, it is necessary to control the first frame 91 to tilt to the left or right relative to the second frame 92, which causes the chain 95 to undergo torsional deformation. The rotation angle of the first frame 91 is limited so that the user difficult to control the electric tricycle 9 smoothly.

The present invention intends to provide a tricycle to eliminate shortcomings mentioned above.

### SUMMARY OF THE INVENTION

The present invention relates to a tricycle and comprises a vehicle body including a first frame and a second frame. The first frame is pivotally connected to the second frame, and the second frame includes two first connectors and two second connectors. A driving assembly includes a chain unit, and the driving assembly is connected to the first frame. A rear wheel assembly includes at least one universal drive shaft which extends through one of the two second connectors of the second frame. The rear wheel assembly is connected to the chain unit of the driving assembly. When the first frame is inclined relative to the second frame, the chain unit is avoided from being twisted. The driving assembly delivers power to the driving assembly via the at least one universal drive shaft.

Preferably, the first frame includes a pivot assembly and a front fork assembly, wherein the front fork assembly is connected to the front end of the first frame. The pivot assembly includes two bearings which are pivotally connected to the two first connectors of the second frame. The two bearings are maintained horizontally on an axial axis X that passes through the two bearings of the pivotal assembly. The at least one universal drive shaft of the rear wheel assembly and the two second connectors of the second frame are maintained horizontally on a transverse axis Y that passes through the two second connectors of the second frame.

Preferably, the driving assembly includes a driving gear and a transmission. The chain unit includes a first chain and a second chain. The first chain is connected to the driving gear and one of two ends of the transmission. The second chain is connected to another one of the two ends of the transmission and a driven gear of the rear wheel assembly.

Preferably, the rear wheel assembly includes two wheels. The driving assembly includes a motor which is connected to the center of one of the two wheels of the rear wheel assembly. The at least one universal drive shaft is connected to the center of another one of the two rear wheels.

Preferably, the rear wheel assembly includes two wheels. The rear wheel assembly includes two universal drive shafts. The two universal drive shafts are respectively connected to two respective centers of the two rear wheels.

Preferably, the driving assembly includes a driving gear and a transmission. The chain unit includes a first chain and a second chain. The first chain is connected to the driving gear and one of two ends of the transmission. The second chain is connected to another one of the two ends of the transmission and a differential of the rear wheel assembly.

Preferably, the driving assembly includes a motor which is located in the inside of the front fork assembly and connected to the driving gear.

The advantages of the present invention are that due to the driving assembly connected to the first frame so that when the first frame turns, the driving assembly is not affected by the deformation of the vehicle body. In other words, when the first frame swings relative to the second frame, the chain unit is not twisted severely, and the universal drive shafts allow the driving assembly to normally transmit power to the rear wheel assembly to move the vehicle body move forward.

When in assembling the tricycle, because the driving assembly is connected to the first frame so that the assembly processes of the first frame and the second frame can be done individually. Then connecting the pivot assembly of the first frame to the first connectors of the first frame so complete the assembly of the tricycle.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the tricycle of the present invention;
Fig. 2 is an exploded view of the tricycle of the present invention;
Fig. 3 shows the connection between the first frame and the second frame of the present invention;
Fig. 4a shows that the universal drive shaft is parallel to the transverse axis Y;
Fig. 4b shows that the first frame is inclined relative to the second frame;
Fig. 5 is a top view of the tricycle of the present invention;
Fig. 6 is a cross sectional view, taken along line Z-Z in Fig. 5;
Fig. 7 shows another embodiment of the tricycle of the present invention;
Fig. 8 shows a cross sectional view of the tricycle in Fig. 7, and
Fig. 9 shows a conventional tricycle.

### DETAILED DESCRIPTION OF THE PREFERRED EMBODIMENT

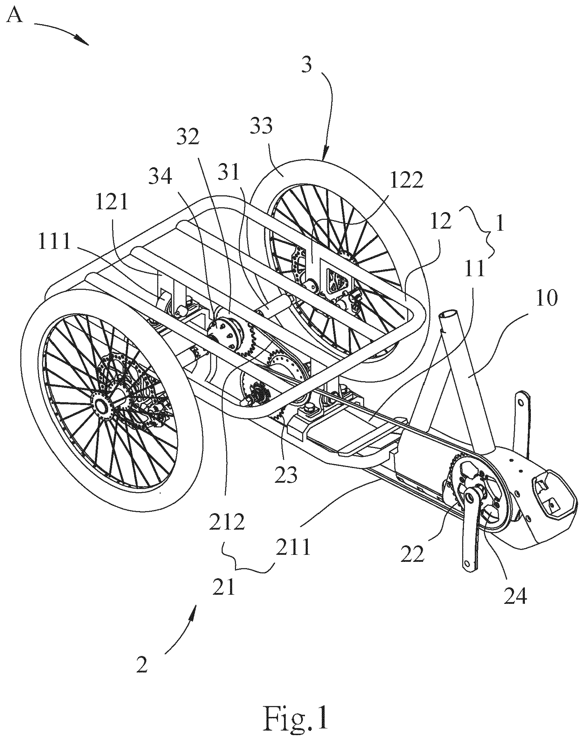

Referring to Figs. 1 to 2, the tricycle "A" of the present invention comprises a vehicle body 1, a driving assembly 2 and a rear wheel assembly 3.

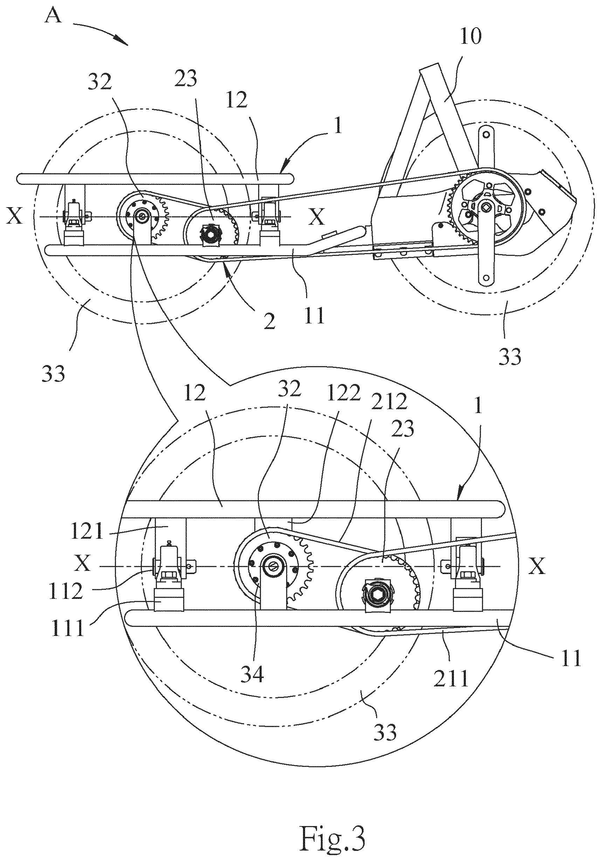

As shown in Figs. 3 to 5, the vehicle body 1 includes a first frame 11 and a second frame 12, and the first frame 11 is pivotally connected to the second frame 12. The second frame 12 includes two first connectors 121 and two second connectors 122. Preferably, the two first connectors 121 are located along an axis of the second frame 2. The two second connectors 122 are located on two sides of the second frame 2, and an axis between the two second connectors 122 is perpendicular to the axis of the second frame 2. The first frame 11 includes a pivot assembly 111 and a front fork assembly 10. The front fork assembly 10 is connected to the front end of the first frame 11. The pivot assembly 111 includes two bearings 112 which are pivotally connected to the two first connectors 121 of the second frame 12. The two bearings 112 are maintained horizontally on an axial axis X that passes through the two bearings 112 of the pivotal assembly 111.

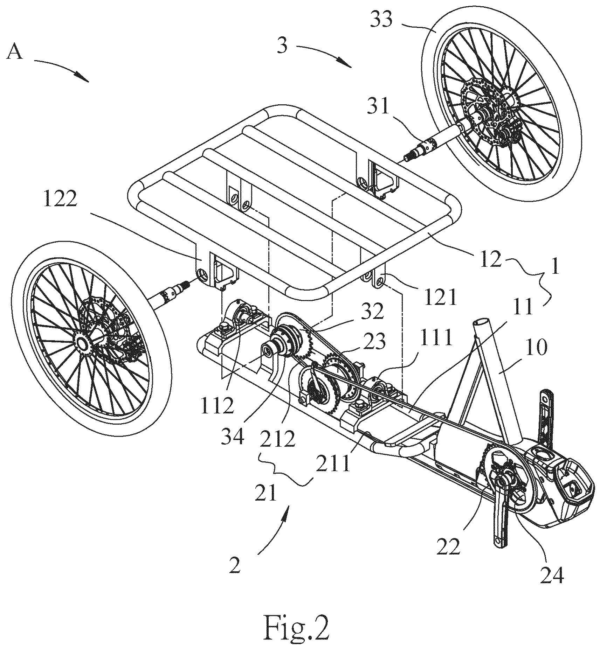

As shown in Figs. 2, 3 and 5, the driving assembly 2 includes a chain unit 21, and the driving assembly 2 is connected to the first frame 11. The driving assembly 2 includes a driving gear 22 and a transmission 23. The driving gear 22 is connected to the front fork assembly 10, and the transmission 23 is connected to a middle position of the first frame 11. The chain unit 21 includes a first chain 211 and a second chain 212. The first chain 211 is connected to the driving gear 22 and one of two ends of the transmission 23. The second chain 212 is connected to another one of the two ends of the transmission 23 and a driven gear 32 of the rear wheel assembly 3.

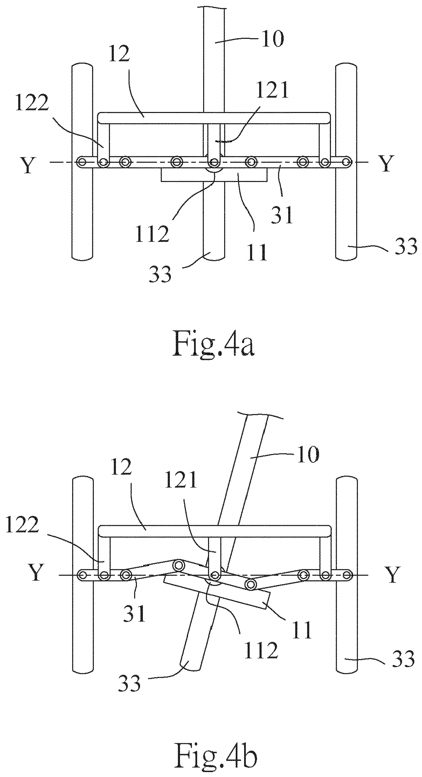

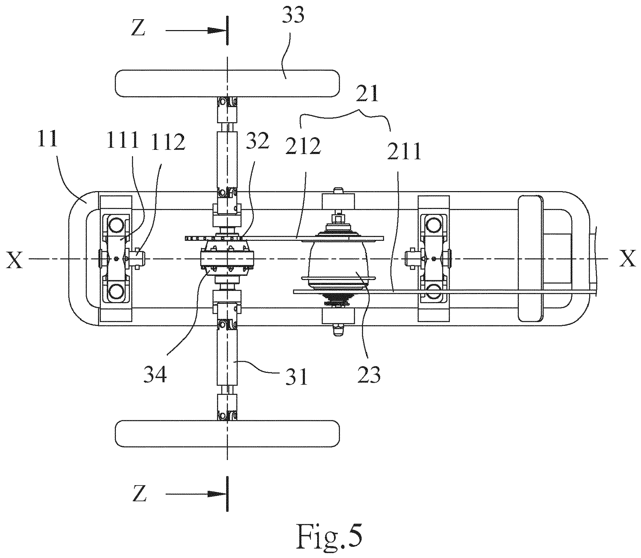

The rear wheel assembly 3 includes two universal drive shafts 31 and two wheels 33. The universal drive shafts 31 extend through the two second connectors 122 of the second frame 12, and are connected to the two wheels 33 as shown in Figs. 4 and 5.

As shown in Figs. 2, 7 and 8, the driving assembly 2 includes a motor 24 which is connected to the center of one of the two wheels 33 of the rear wheel assembly 3. Alternatively, the motor 24 is located in the inside of the front fork assembly 10 and is connected to the driving gear 22.

As shown in Figs. 4 to 6, the two universal drive shafts 31 of the rear wheel assembly 3 and the two second connectors 122 of the second frame 12 are maintained horizontally on a transverse axis Y that passes through the two second connectors 122 of the second frame 12.

As shown in Figs. 3 to 6, the motor 24 is located in the inside of the front fork assembly 10 and is connected to the driving gear 22 and one of the two wheels 33. The driven gear 32 of the rear wheel assembly 3 is connected to a differential 34. By rotating the driving gear 22 which sends a power to the first chain 211 so as to activate the transmission 23. The second chain 212 connected to the transmission 23 is then activated to drive the driven gear 32 which is connected to the two universal drive shafts 31, so that the two wheels 33 are rotated by the two universal drive shafts 31, and drive the tricycle "A" of the present invention forward. It is noted that the motor 24 is able to drive the driving gear 22, the first chain 211, the transmission 23, the second chain 212, the driven gear 32 and the two universal drive shafts 31 to move the tricycle "A" of the present invention forward.

When the tricycle "A" of the present invention turns, thanks to the connected between the bearings 112 and the first connectors 121, the first frame 11 is inclined an angle "θ" relative to the second frame 12, while the second frame 12 is maintained horizontally relative to the transverse axis Y, and the rear wheel assembly 3 is inclined the angle "θ". The first and second chains 211, 212 of the chain unit 21 are avoided from being twisted, and the driving assembly 2 still delivers power to the driving assembly 2 via the universal drive shafts 31. The tricycle "A" of the present invention is able to turn a larger angle.

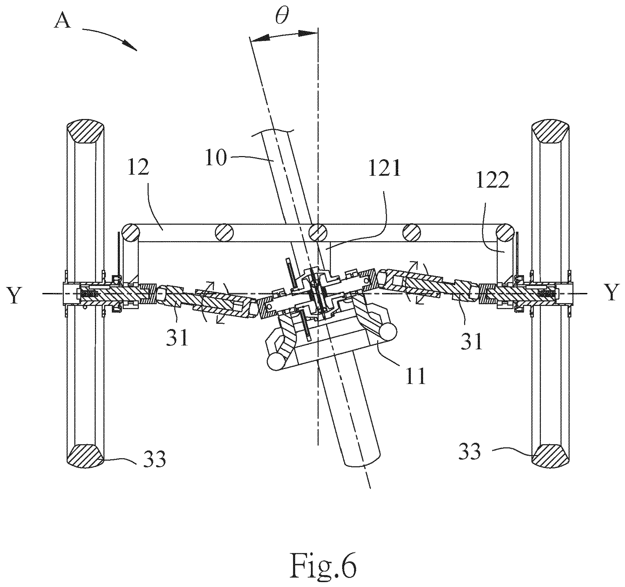

As shown in Figs. 4 and 6, when the first frame 11 of the vehicle body 1 is inclined the angle "θ", an restriction angle is formed between the two the universal drive shafts 31 and the transverse axis Y, wherein the restriction angle for each of the two the universal drive shafts 31 is 45 degrees. The change of the restriction and the change of the length of the universal drive shafts 31 is smaller when the two universal drive shafts 31 are located close to the transverse axis Y. Furthermore, the first and second frames 11, 12 are independently assembled and manufactured so that the manufacturing is simplified. The first connectors 121 are then pivotably connected to the pivot assembly 111 to complete the tricycle "A" of the present invention.

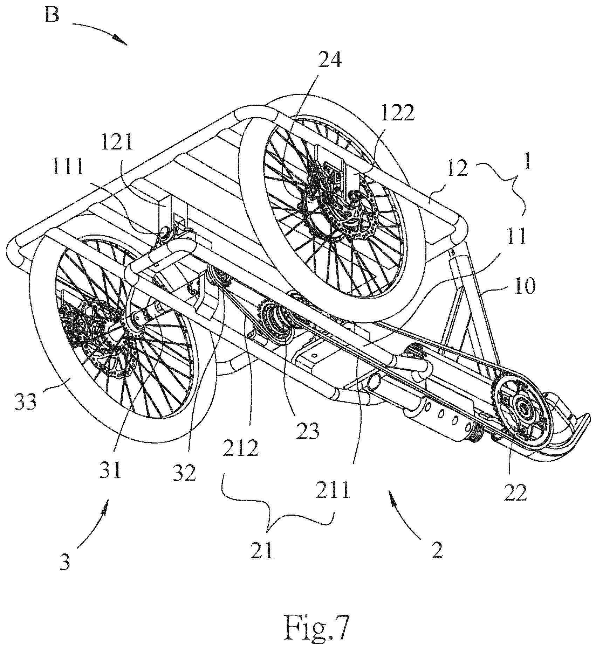

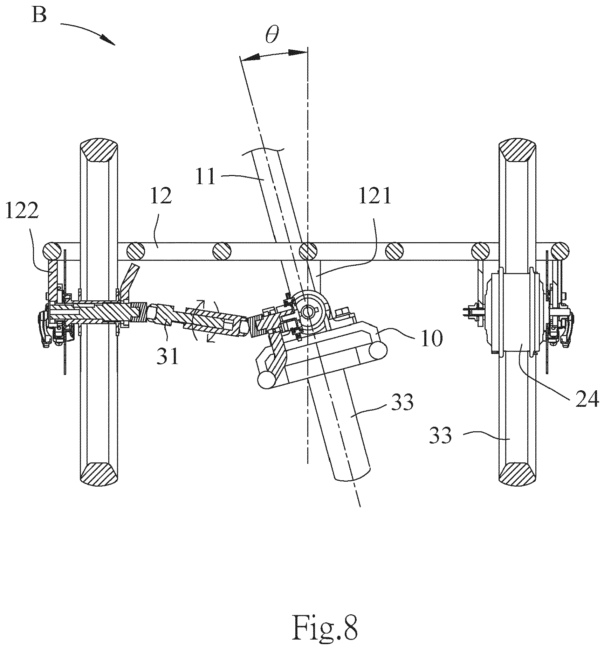

As shown in Figs. 7 and 8, another embodiment of the tricycle "B" of the present invention is provided, wherein only one universal drive shaft 31 is required. The motor 24 is connected to the center of one of the two wheels 33, and the center of another one of the two wheels 33 is connected with the universal drive shaft 31. The motor 24 directly drive the wheel 33 to move the tricycle "B" forward. When the first frame 11 is inclined relative to the second frame 12, the universal drive shaft 31 is pivoted to allow the tricycle "B" to move forward.

While we have shown and described the embodiment in accordance with the present invention, it should be clear to those skilled in the art that further embodiments may be made without departing from the scope of the present invention.

## Claims

1. A tricycle comprising:
a vehicle body (1) including a first frame (91) and a second frame (92), the first frame (91) pivotally connected to the second frame (92), the second frame (92) including two first connectors (121) and two second connectors (122);
a driving assembly (2) including a chain unit(21), the driving assembly(2) connected to the first frame (91), and
a rear wheel assembly (3) including at least one universal drive shaft (31) which extends through one of the two second connectors (122) of the second frame (92), the rear wheel assembly (3) connected to the chain unit (21) of the driving assembly (2), when the first frame (91) is inclined relative to the second frame (92), the chain unit (21) is avoided from being twisted, and the driving assembly (2) delivers power to the driving assembly (2) via the at least one universal drive shaft (31).

2. The tricycle as claimed in claim 1, wherein the first frame (91) includes a pivot assembly (111) and a front fork assembly (10), the front fork assembly (10) is connected to a front end of the first frame (91), the pivot assembly (111) includes two bearings which are pivotally connected to the two first connectors (121) of the second frame (92), the two bearings are maintained horizontally on an axial axis that passes through the pivotal assembly (111), the at least one universal drive shaft (31) of the rear wheel assembly (3) and the two second connectors (122) of the second frame (92) are maintained horizontally on a transverse axis that passes through the two second connectors (122) of the second frame (92).

3. The tricycle as claimed in claim 2, wherein the driving assembly (2) includes a driving gear (22) and a transmission (23), the chain unit (21) includes a first chain (211) and a second chain (212), the first chain (211) is connected to the driving gear (22) and one of two ends of the transmission (23), the second chain (212) is connected to another one of the two ends of the transmission (23) and a driven gear (22) of the rear wheel assembly (3).

4. The tricycle as claimed in claim 3, wherein the rear wheel assembly (3) includes two wheels (33), the driving assembly (2) includes a motor(24) which is connected to a center of one of the two wheels (33) of the rear wheel assembly (3), the at least one universal drive shaft (31) is connected to a center of another one of the two rear wheels.

5. The tricycle as claimed in claim 2, wherein the rear wheel assembly (3) includes two wheels (33), the rear wheel assembly (3) includes two universal drive shafts (31), the two universal drive shafts (31) are respectively connected to two respective centers of the two rear wheels.

6. The tricycle as claimed in claim 5, wherein the driving assembly (2) includes a driving gear (22) and a transmission (23), the chain unit (21) includes a first chain (211) and a second chain (212), the first chain (211) is connected to the driving gear (22) and one of two ends of the transmission (23), the second chain (212) is connected to another one of the two ends of the transmission (23) and a differential of the rear wheel assembly (3).

7. The tricycle as claimed in claim 6, wherein the driving assembly (2) includes a motor (24) which is located in an inside of the front fork assembly (10) and connected to the driving gear (22).
